(19)

**Europäisches Patentamt**
**European Patent Office**
**Office européen des brevets**

(11) **EP 4 233 355 B1**

(12) **EUROPEAN PATENT SPECIFICATION**

(45) Date of publication and mention
of the grant of the patent:
**05.08.2026 Bulletin 2026/32**

(21) Application number: **21801643.4**

(22) Date of filing: **22.10.2021**

(51) International Patent Classification (IPC):
**H04W 24/10** (2009.01)   **H04B 7/185** (2006.01)
**H04W 36/30** (2009.01)   **H04W 36/32** (2009.01)

(52) Cooperative Patent Classification (CPC):
**H04W 24/10; H04B 7/1853; H04W 36/304;**
**H04W 36/322; H04W 56/0045**

(86) International application number:
**PCT/IB2021/059785**

(87) International publication number:
**WO 2022/084960 (28.04.2022 Gazette 2022/17)**

(54) **ENHANCEMENTS FOR MEASUREMENT TRIGGERING IN NON-TERRESTRIAL NETWORKS**

VERBESSERUNGEN FÜR MESSAUSLÖSUNGEN IN NICHT TERRESTRISCHEN NETZWERKEN

AMÉLIORATIONS POUR LE DÉCLENCHEMENT DE MESURES DANS DES RÉSEAUX NON
TERRESTRES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.10.2020 US 202063104324 P**

(43) Date of publication of application:
**30.08.2023 Bulletin 2023/35**

(73) Proprietor: **Telefonaktiebolaget LM Ericsson**
**(publ)**
**164 83 Stockholm (SE)**

(72) Inventors:
• **YAVUZ, Emre**
**112 52 Stockholm (SE)**
• **RUNE, Johan**
**181 29 Lidingö (SE)**
• **MÄÄTTANEN, Helka-Liina**
**00510 Helsinki (FI)**
• **HOFSTRÖM, Björn**
**589 41 Linköping (SE)**

(74) Representative: **Ericsson**
**Patent Development**
**Torshamnsgatan 21-23**
**164 80 Stockholm (SE)**

(56) References cited:
EP-A1- 3 681 197      EP-A1- 3 681 197
WO-A1-2020/163610      WO-A1-2020/163610

• **NEC: "Location based mobility enhancement",**
**vol. RAN WG2, no. Chongqing, China;, 3 October**
**2019 (2019-10-03), XP051804046, Retrieved from**
**the Internet <URL:https://ftp.3gpp.org/tsg_ran/**
**WG2_RL2/TSGR2_107bis/Docs/R2-1912977.zip**
**R2-1912977_location based mobility**
**enhancement.doc> [retrieved on 20191003]**
• **"3rd Generation Partnership Project; Technical**
**Specification Group Radio Access Network;**
**Solutions for NR to support non-terrestrial**
**networks (NTN) (Release 16)", 2 December 2019**
**(2019-12-02), XP051834143, Retrieved from the**
**Internet <URL:https://ftp.3gpp.org/tsg_ran/**
**TSG_RAN/TSGR_86/Docs/RP-192504.zip**
**RP-192504_38821-100_V8.doc> [retrieved on**
**20191202]**
• **NEC: "Location based mobility enhancement",**
**vol. RAN WG2, no. Chongqing, China;, 3 October**
**2019 (2019-10-03), XP051804046, Retrieved from**
**the Internet <URL:https://ftp.3gpp.org/tsg_ran/**
**WG2_RL2/TSGR2_107bis/Docs/R2-1912977.zip**
**R2-1912977_location based mobility**
**enhancement.doc> [retrieved on 20191003]**

- SAMSUNG: "Control Plane Enhancements for the Connected Mode in an NTN- Overall Observations and Proposals", vol. RAN WG2, no. e-Meeting; 20200817 - 20200828, 6 August 2020 (2020-08-06), XP051910890, Retrieved from the Internet <URL:https://ftp.3gpp.org/tsg_ran/WG2_RL2/TSGR2_111-e/Docs/R2-2006953.zip R2-2006953_For8.10.3.2_UP_ConnectedMode_ObservationsProposals_Samsung.doc> [retrieved on 20200806]
- INTEL CORPORATION: "Mobility enhancement for NTN", vol. RAN WG2, no. E-Meeting, USA; 20200817 - 20200828, 7 August 2020 (2020-08-07), XP051911793, Retrieved from the Internet <URL:https://ftp.3gpp.org/tsg_ran/WG2_RL2/TSGR2_111-e/Docs/R2-2006930.zip R2-2006930.docx> [retrieved on 20200807]
- "3rd Generation Partnership Project; Technical Specification Group Radio Access Network; Solutions for NR to support non-terrestrial networks (NTN) (Release 16)", vol. RAN WG3, no. V1.0.0, 2 December 2019 (2019-12-02), pages 1 - 143, XP051840691, Retrieved from the Internet <URL:ftp://ftp.3gpp.org/Specs/archive/38_series/38.821/38821-100.zip RP-192504_38821-100_V8.doc> [retrieved on 20191202]

**Description**

TECHNICAL FIELD

The present disclosure relates, in general, to wireless communications and, more particularly, systems and methods providing enhancements for measurement triggering in Non-Terrestrial Networks (NTNs).

BACKGROUND

Third Generation Partnership Project (3GPP) Release 8 specifies the Evolved Packet System (EPS). EPS is based on the Long-Term Evolution (LTE) radio network and the Evolved Packet Core (EPC). It was originally intended to provide voice and mobile broadband (MBB) services, but it has continuously evolved to broaden its functionality. Since Release 13, Narrowband Internet-of-Things (NB-IoT) and LTE for machines (LTE-M) are part of the LTE specifications and provide connectivity to massive machine type communications (mMTC) services.

The prior art includes the following documents:
NEC: "Location based mobility enhancement", 3GPP DRAFT; R2-1912977, describing location based mobility enhancement.

WO 2020/1 63610 A1 describes a wireless transmit/receive unit (WTRU) communicating in a non-terrestrial network (NTN) comprising a plurality of satellites. The WTRU may be preconfigured with a plurality of measurement configurations and a corresponding plurality of activation/deactivation criteria associated with the plurality of satellites. The activation/deactivation criteria includes at least activation timing information. The WTRU may activate and deactivate each of the plurality of measurement configurations over time in accordance with the activation/deactivation criteria. The WTRU may perform measurements on cell beams for satellites with active measurement configurations and report results based on the measurements to NTN.

EP 3 681 197 A1 describes a wireless device, such as a user equipment, operating in a dormant mode comprise performing a measurement on each of a plurality of resources from a predetermined set of resources or demodulating and decoding information from each of a plurality of resources from a predetermined set of resources, such as a set of beams. The methods further include evaluating the measurement or the demodulated and decoded information for each of the plurality of resources against a predetermined criterion, and then discontinuing the performing and evaluating of measurements, or discontinuing the demodulating and decoding and evaluation of information, in response to determining that the predetermined criterion is met, such that one or more resources in the predetermined set of resources are neither measured nor demodulated and decoded. The methods further comprise deactivating receiver circuitry, further in response to determining that the predetermined criterion is met. The method further comprises receiving, in a first downlink subframe, a first Orthogonal Frequency-Division Multiplexing transmission formatted according to a first numerology and receiving, in a second downlink subframe, a second OFDM transmission formatted according to a second numerology, the second numerology differing from the first numerology.

"3rd Generation Partnership Project; Technical Specification Group Radio Access Network; Solutions for NR to support non-terrestrial networks (NTN) (Release 16)",3GPP DRAFT; RP-192504, 3RD GENERATION PARTNERSHIP PROJECT (3GPP), MOBILE COMPETENCE CENTRE, describes solutions for NR to support non-terrestrial networks.

3GPP Release 15 specifies the first release of the 5G system (5GS). This new generation radio access technology intended to serve use cases such as enhanced mobile broadband (eMBB), ultra-reliable and low latency communication (URLLC), and mMTC. The 5G specification includes the New Radio (NR) access stratum interface and the 5G Core Network (5GC). The NR physical and higher layers reuse parts of the LTE specification and add components as needed for the new use cases.

In Release 15, 3GPP also started the work to prepare NR for operation in a Non-Terrestrial Network (NTN). The work was performed within the study item "NR to support Non-Terrestrial Networks" and resulted in 3GPP Technical Report (TR) 38.811. In Release 16, the work to prepare NR for operation in an NTN network continues with the study item "Solutions for NR to support Non-Terrestrial Network." In parallel, the interest to adapt LTE for operation in NTN is growing. As a consequence, 3GPP is considering introducing support for NTN in both LTE and NR in Release 17.

The prior art further includes release 16 wherein 3GPP further specified the "3rd Generation Partnership Project; Technical Specification Group Radio Access Network; Solutions for NR to support non-terrestrial networks (NTN) (Release 16)" (RP-192504).

A satellite radio access network usually includes the following components:

- Satellite: a space-borne platform.
- Earth-based gateway: connects the satellite to a base station or a core network, depending on the choice of architecture.
- Feeder link: the link between a gateway and a satellite.

- Access link: the link between a satellite and a user equipment (UE).

Depending on the orbit altitude, a satellite may be categorized as low earth orbit (LEO), medium earth orbit (MEO), or geostationary earth orbit (GEO) satellite.

- LEO: typical heights ranging from 250 - 1,500 km, with orbital periods ranging from 90 - 120 minutes.
- MEO: typical heights ranging from 5,000 - 25,000 km, with orbital periods ranging from 3 - 15 hours.
- GEO: height at about 35,786 km, with an orbital period of 24 hours.

Satellite systems tend to have significantly higher path loss than terrestrial networks due to their significant orbit height. Overcoming the path loss often requires the access and feeder links to be operated in line-of-sight conditions and the UE to be equipped with an antenna offering high beam directivity.

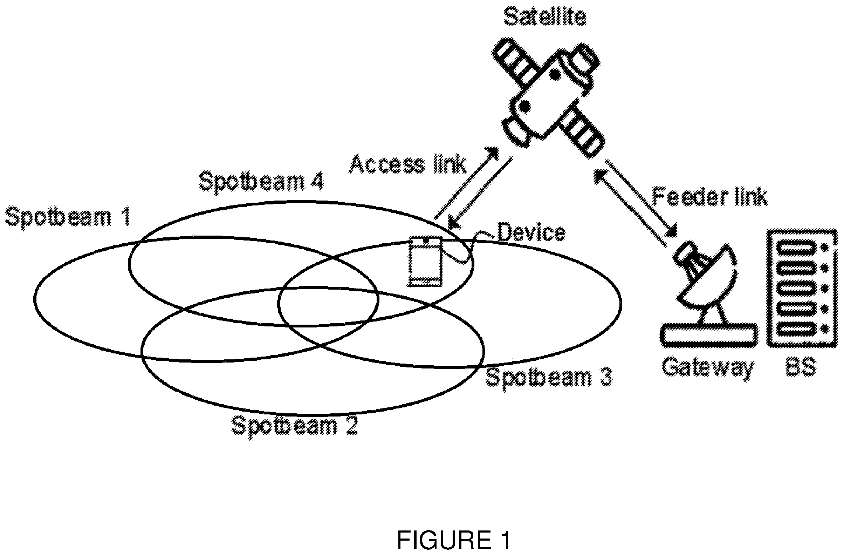

A communication satellite typically generates several beams over a given area. The "footprint" or "spotbeam" of a beam is usually in an elliptic shape, which has been traditionally considered as a cell. The spotbeam may move over the earth surface with the satellite movement (often referred to as the moving beam or moving cell case). Or, the spotbeam may be earth-fixed with some beam pointing mechanism used by the satellite to compensate for its motion (often referred to as the earth-fixed beam or earth-fixed cell case). The size of a spotbeam depends on the system design and may range from tens of kilometers to a few thousands of kilometers. FIGURE 1 shows an example architecture of a satellite network with bent pipe transponders.

In comparison to the beams observed in a terrestrial network, the NTN beam may be very wide and may cover an area outside of the area defined by the served cell. A beam covering adjacent cells will overlap and cause significant levels of intercell interference. A typical approach for overcoming the large levels of interference in the NTN involves configuring different cells with different carrier frequencies and polarization modes.

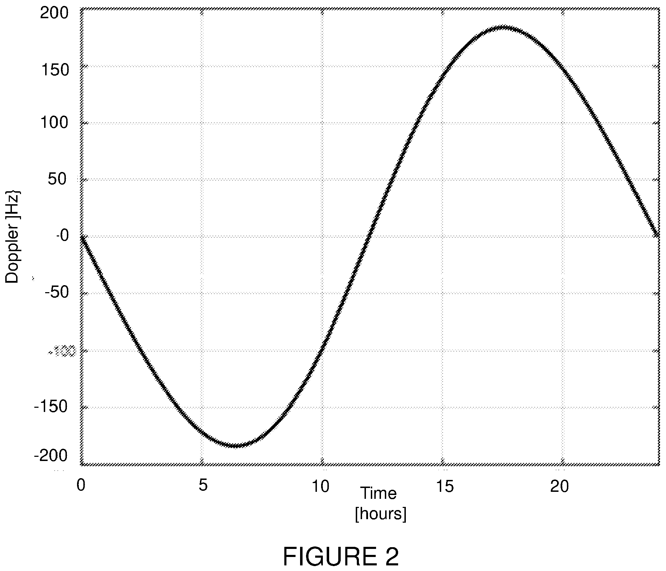

In a LEO NTN, the satellites are moving with a very high velocity. This leads to a Doppler shift of the carrier frequency on the service link of up to 24 ppm for a LEO satellite at 600 km altitude. See, TR 38.821, Solutions for NR to support non-terrestrial networks. The Doppler shift is also time variant due to the satellite motion over the sky. The Doppler shift may vary with up to 0.27 ppm/s for a LEO 600 km satellite. The Doppler shift will impact, i.e., increase or decrease, the frequency received on the service link compared to the transmitted frequency. For GEO NTN, the satellites may move in an orbit inclined relative to the plane of the equator. The inclination introduces a periodic movement of the satellite relative earth which introduces a predictable, and daily periodically repeating Doppler shift of the carrier frequency as exemplified in the below figure. FIGURE 2 illustrates an example of the diurnal Doppler shift of the forward service link observed for a GEO satellite operating from an inclined orbit.

In 3GPP TR 38.821, it has been captured that ephemeris data should be provided to the UE, for example, to assist with pointing a directional antenna (or an antenna beam) towards the satellite. See, RP-181370, Study on solutions evaluation for NR to support non-terrestrial Network. A UE knowing its own position such as, for example, thanks to Global Navigation Satellite System (GNSS) support, may also use the ephemeris data to calculate correct Timing Advance (TA) and Doppler shift. The contents of the ephemeris data and the procedures on how to provide and update such data have not yet been studied in detail.

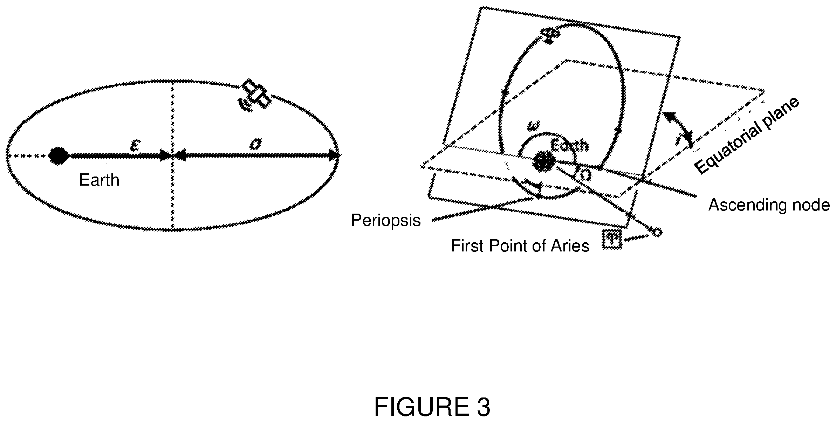

A satellite orbit can be fully described using six parameters. A user can choose exactly which set of parameters to use; many different representations are possible. For example, the set of parameters $(a, \varepsilon, i, \Omega, \omega, t)$ is often used in astronomy. Here, the semi-major axis "$a$" and the eccentricity "$\varepsilon$" describe the shape and size of the orbit ellipse; the inclination "i," the right ascension of the ascending node "$\Omega$," and the argument of periapsis "$\omega$" determine its position in space, and the epoch "$t$" determines a reference time (e.g., the time when the satellites moves through periapsis). This set of parameters is illustrated in FIGURE 3. In FIGURE 3, the periapsis refers to a point where the orbit is nearest to Earth, the first point of Aries refers to the direction towards the sun at the March equinox, and the ascending node refers to the point where the orbit passes upwards through the equatorial plane.

A two-line element set (TLE) is a data format encoding a list of orbital elements of an Earth-orbiting object for a given point in time, the epoch. As an example of a different parametrization, the TLEs may use mean motion "n" and mean anomaly "$M$" instead of $a$ and $t$. A completely different set of parameters is the position and velocity vector $(x, y, z, v_x, v_y, v_z)$ of a satellite. These are sometimes called orbital state vectors. They can be derived from the orbital elements and vice versa, since the information they contain is equivalent. All these formulations (and many others) are possible choices for the format of ephemeris data to be used in NTN.

It is important that a UE can determine the position of a satellite with accuracy of at least a few meters. See, RP-181370, Study on solutions evaluation for NR to support non-terrestrial Network. However, several studies have shown that this might be hard to achieve when using the de-facto standard of TLEs. On the other hand, LEO satellites often have GNSS receivers and can determine their position with some meter level accuracy.

Another aspect discussed during the study item and captured in 3GPP TR 38.821 is the validity time of ephemeris data. Predictions of satellite positions in general degrade with increasing age of the ephemeris data used, due to atmospheric drag, maneuvering of the satellite, imperfections in the orbital models used, etc. Therefore, the publicly available TLE data are updated quite frequently, for example. The update frequency depends on the satellite and its orbit, for example, the update frequency may range from multiple times a day (e.g., for satellites on very low orbits which are exposed to strong atmospheric drag and need to perform correctional maneuvers often) to weekly (e.g., for satellites on relatively higher orbits or satellites that are exposed to less atmospheric drag).

So, while it seems possible to provide the satellite position with the required accuracy, care needs to be taken to meet these requirements such as, for example, when choosing the ephemeris data format or when choosing the orbital model to be used for the orbital propagation.

Ephemeris data consists of at least five parameters describing the shape and position in space of the satellite orbit. It also comes with a timestamp, which is the time when the other parameters describing the orbit ellipse were obtained. The position of the satellite at any given time in the nearer future can be predicted from this data using orbital mechanics. The accuracy of this prediction will however degrade as one projects further and further into the future. The validity time of a certain set of parameters depends on many factors like the type and altitude of the orbit, but also the desired accuracy, and ranges from the scale of a few days to a few years.

In connected state, i.e., RRC_CONNECTED state, a UE has a connection established to the network. The aim of connected-state mobility is to ensure that the connectivity is retained with no interruption or noticeable degradation as the device moves within the network. The UE is required to do searches for new cells both on the current carrier frequency (intra-frequency) and different carrier frequencies (inter-frequency) that are informed by the network. The UE does not make any decisions on its own regarding when it is time to trigger a handover procedure to a different cell (except partly in the case of conditional handover). This is rather based on a variety of triggering conditions. In general, the UE reports the results of any configured measurements to the network so that the network can make a decision on whether or not it is time for handover to a new cell. However, when conditional handover is used, the network partly "delegates" the execution decision to the UE by instructing it to execute a handover when certain trigger conditions are fulfilled.

In 5G NR, handover is a special case of a procedure called "reconfiguration with sync". In addition, a variety of handover mechanisms, such as Dual Active Protocol Stack (DAPS), conditional handover (CHO), and RACH-less HO (only for LTE), have been introduced in specifications to enhance the mobility robustness performance for challenging scenarios that require low-latency and high reliability performance. Typically, before the actual HO, network configures UEs with RRM measurements and makes HO decision based on measurement reports send by the UEs.

The following excerpt from TS 38.300 V16.2.0 (2020-07) details the measurement model (how the cell level and beam level layer 3 measurements are derived) in NR.

In RRC_CONNECTED, the UE measures multiple beams (at least one) of a cell and the measurements results (power values) are averaged to derive the cell quality. In doing so, the UE is configured to consider a subset of the detected beams. Filtering takes place at two different levels: at the physical layer to derive beam quality and then at RRC level to derive cell quality from multiple beams. Cell quality from beam measurements is derived in the same way for the serving cell(s) and for the non-serving cell(s). Measurement reports may contain the measurement results of the Xbest beams if the UE is configured to do so by the gNB.

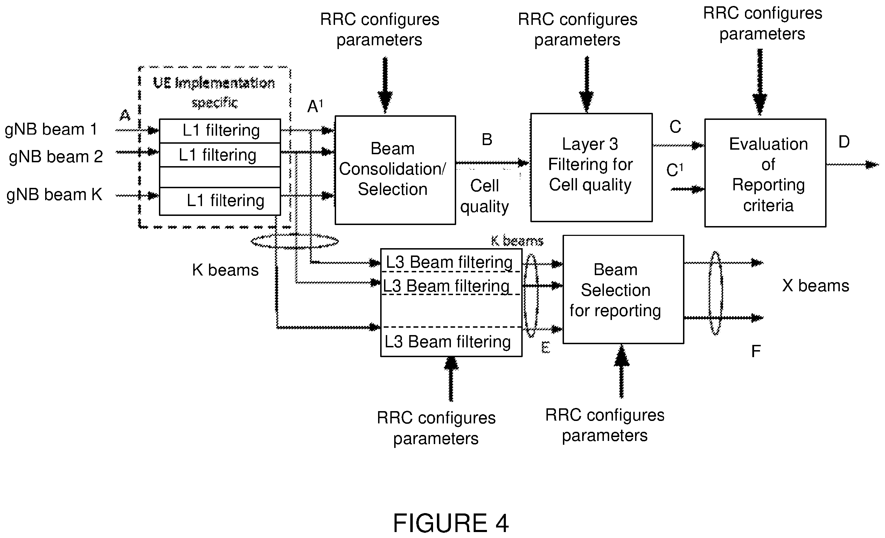

The corresponding high-level measurement model is illustrated in [FIGURE 4] and described below. Note that in [FIGURE 4], K beams correspond to the measurements on SSB or CSI-RS resources configured for L3 mobility by gNB and detected by UE at L1. [FIGURE 4] illustrates:

- A: measurements (beam specific samples) internal to the physical layer.
- **Layer 1 filtering:** internal layer 1 filtering of the inputs measured at point A. Exact filtering is implementation dependent. How the measurements are actually executed in the physical layer by an implementation (inputs A and Layer 1 filtering) in not constrained by the standard.
- $A^1$: measurements (i.e., beam specific measurements) reported by layer 1 to layer 3 after layer 1 filtering.
- **Beam Consolidation/Selection:** beam specific measurements are consolidated to derive cell quality. The behaviour of the Beam consolidation/selection is standardised and the configuration of this module is provided by RRC signalling. Reporting period at B equals one measurement period at $A^1$.
- B: a measurement (i.e., cell quality) derived from beam-specific measurements reported to layer 3 after beam consolidation/selection.
- **Layer 3 filtering for cell quality:** filtering performed on the measurements provided at point B. The behaviour of the Layer 3 filters is standardised and the configuration of the layer 3 filters is provided by RRC signalling. Filtering reporting period at C equals one measurement period at B.
- **C:** a measurement after processing in the layer 3 filter. The reporting rate is identical to the reporting rate at point B. This measurement is used as input for one or more evaluation of reporting criteria.
- **Evaluation of reporting criteria:** checks whether actual measurement reporting is necessary at point D. The evaluation can be based on more than one flow of measurements at reference point C e.g., to compare between different measurements. This is illustrated by input C and $C^1$. The UE shall evaluate the reporting criteria at least every time a new measurement result is reported at point C, C[1]. The reporting criteria are standardised and the configuration is provided by RRC signalling (UE measurements).

- **D:** measurement report information (message) sent on the radio interface.
- **L3 Beam filtering:** filtering performed on the measurements (i.e., beam specific measurements) provided at point A[1]. The behaviour of the beam filters is standardised and the configuration of the beam filters is provided by RRC signalling. Filtering reporting period at E equals one measurement period at A[1].
- **E:** a measurement (i.e., beam-specific measurement) after processing in the beam filter. The reporting rate is identical to the reporting rate at point A[1]. This measurement is used as input for selecting the X measurements to be reported.
- **Beam Selection for beam reporting:** selects the X measurements from the measurements provided at point E. The behaviour of the beam selection is standardised and the configuration of this module is provided by RRC signalling.
- **F:** beam measurement information included in measurement report (sent) on the radio interface.

Layer 1 filtering introduces a certain level of measurement averaging. How and when the UE exactly performs the required measurements is implementation specific to the point that the output at B fulfils the performance requirements set in 3GPP TS 38.133. Layer 3 filtering for cell quality and related parameters used are specified in 3GPP TS 38.331 and do not introduce any delay in the sample availability between B and C. Measurement at point C, C[1] is the input used in the event evaluation. L3 Beam filtering and related parameters used are specified in 3GPP TS 38.331 and do not introduce any delay in the sample availability between E and F.

The measurement procedures distinguish the following types of cells:

- The NR serving cell(s) - these are the Special Cell (SpCell) and one or more Secondary Cells (SCell)s.
- Listed cells - these are cells listed within the measurement object(s).
- Detected cells - these are cells that are not listed within the measurement object(s) but are detected by the UE on the SSB frequency(ies) and subcarrier spacing(s) indicated by the measurement object(s).

Herein, the NR detected cells and listed cells (which may be called neighbour cells, or non-serving cells) are the most relevant.

As defined above, NR listed cells are the cells listed within the measurement object(s), as shown below:

```
MeasObjectNR information element

-- ASN1START

-- TAG-MEASOBJECTNR-START


MeasObjectNR ::=                        SEQUENCE {
    ssbFrequency                              ARFCN-ValueNR
[…]
    cellsToAddModList
OPTIONAL,    -- Need N
    blackCellsToAddModList                SEQUENCE (SIZE
(1..maxNrofPCI-Ranges)) OF PCI-RangeElement    OPTIONAL,
-- Need N
    whiteCellsToAddModList                SEQUENCE (SIZE
(1..maxNrofPCI-Ranges)) OF PCI-RangeElement    OPTIONAL,
-- Need N
[…]
}
```

There are three kinds of listed cells. Cells with cell-specific offsets is one example. Cells with cell-specific offsets are configured within cellsToAddModList. They are used for event-triggered measurement reporting. Each element in the list contains a cell, indicated by a physical cell identity (PCI, field *physCellId* of IE *PhysCellId*) and cell-specific offsets for entering leaving conditions of events like A1-A6 (field *cellIndividualOffset* of IE Q-OffsetRangeList). The following shows fields and information elements (IEs) where the cell list is configured:

```
CellsToAddModList ::=                         SEQUENCE (SIZE
(1..maxNrofCellMeas)) OF CellsToAddMod


CellsToAddMod ::=                      SEQUENCE {
    physCellId                            PhysCellId,
    cellIndividualOffset                  Q-OffsetRangeList
}


[…]


Q-OffsetRangeList ::=                  SEQUENCE {
    rsrpOffsetSSB                             Q-OffsetRange
DEFAULT dB0,
    rsrqOffsetSSB                             Q-OffsetRange
DEFAULT dB0,
    sinrOffsetSSB                             Q-OffsetRange
DEFAULT dB0,
    rsrpOffsetCSI-RS                          Q-OffsetRange
DEFAULT dB0,
    rsrqOffsetCSI-RS                          Q-OffsetRange
DEFAULT dB0,
    sinrOffsetCSI-RS                          Q-OffsetRange
DEFAULT dB0
}
```

The following shows an example of an event, Event A3:

5.5.4.4 Event A3 (Neighbour becomes offset better than SpCell)

The UE shall:

1> consider the entering condition for this event to be satisfied when condition A3-1, as specified below, is fulfilled;
1> consider the leaving condition for this event to be satisfied when condition A3-2, as specified below, is fulfilled;
1> use the SpCell for *Mp, Ofp and Ocp.*

NOTE 1: The cell(s) that triggers the event has reference signals indicated in the *measObjectNR* associated to this event which may be different from the NR SpCell *measObjectNR.*

Inequality A3-1 (Entering condition)

$$Mn + Ofn + Ocn - Hys > Mp + Ofp + Ocp + Off$$

Inequality A3-2 (Leaving condition)

$$Mn + Ofn + Ocn + Hys < Mp + Ofp + Ocp + Off$$

The variables in the formula are defined as follows:

*Mn* is the measurement result of the neighbouring cell, not taking into account any offsets.

*Ofn* is the measurement object specific offset of the reference signal of the neighbour cell (i.e., *offsetMO* as defined within *measObjectNR* corresponding to the neighbour cell).

*Ocn* is the cell specific offset of the neighbour cell (i.e., *cellIndividualOffset* as defined within *measObjectNR* corresponding to the frequency of the neighbour cell), and set to zero if not configured for the neighbour cell.

*Mp* is the measurement result of the SpCell, not taking into account any offsets.

*Ofp* is the measurement object specific offset of the SpCell (i.e., *offsetMO* as defined within *measObjectNR* corresponding to the SpCell).

*Ocp* is the cell specific offset of the SpCell (i.e., *cellIndividualOffset* as defined within *measObjectNR* corresponding to the SpCell), and is set to zero if not configured for the SpCell.

*Hys* is the hysteresis parameter for this event (i.e., *hysteresis* as defined within *reportConfigNR* for this event).

*Off* is the offset parameter for this event (i.e., *a3-Offset* as defined within *reportConfigNR* for this event).

*Mn, Mp* are expressed in dBm in case of RSRP, or in dB in case of RSRQ and RS-SINR.

*Ofn, Ocn, Ofp, Ocp, Hys, Off* are expressed in dB.

NOTE 2: The definition of Event A3 also applies to CondEvent A3.

5.5.4 Measurement report triggering

5.5.4.1 General

If AS security has been activated successfully, the UE shall:

1> for each *measId* included in the *measIdList* within *VarMeasConfig:*
2> if the corresponding *reportConfig* includes a *reportType* set to *eventTriggered* or *periodical:*
3> if the corresponding *measObject* concerns NR:
4> if the *eventAl* or *eventA2* is configured in the corresponding *reportConfig:*
5> consider only the serving cell to be applicable;
4> if the *eventA3* or *eventA5* is configured in the corresponding *reportConfig:*
5> if a serving cell is associated with a *measObjectNR* and neighbours are associated with another *measObjectNR,* consider any serving cell associated with the other *measObjectNR* to be a neighbouring cell as well;
4> if corresponding *reportConfig* includes *reportType* set to *periodical;* or
4> for measurement events other than *eventA1* or *eventA2:*
5> if *useWhiteCellList* is set to *true:*
6> consider any neighbouring cell detected based on parameters in the associated *measObjectNR* to be applicable when the concerned cell is included in the *whiteCellsToAddModList* defined within the *VarMeasConfig* for this *measId;*
5> else:
6> consider any neighbouring cell detected based on parameters in the associated *measObjectNR* to be applicable when the concerned cell is not included in the *blackCellsToAddModList* defined within the *VarMeasConfig* for this *measId;* [...]

As defined above, NR detected cells are the cells not listed within the measurement object(s) but are detected by the UE on the synchronization signal (SSB) frequency/frequencies and subcarrier spacing(s) indicated by the measurement object(s). In a normal case (i.e., in a network that is properly configured, without Physical Cell Identifier (PCI) collision), each detected cell in a given frequency (associated with a measurement object) has a unique PCI in that frequency.

In that sense, a detected cell is a cell in the configured frequency (i.e., configured measurement object - MO) with a given PCI associated to the detected SSBs (PCI being derived by detecting the synchronization sequences primary synchronization signal (PSS) and secondary synchronization signal (SSS), as defined in TS 38.211).

There currently exist certain challenge(s). The following can be considered as main challenges that need to be addressed when evolving NR to support NTN: moving cells, long propagation delays, and large Doppler shifts.

- Moving cells: The default assumption in terrestrial network design, e.g., NR or LTE, is that cells are stationary. This is not the case in NTN, especially when LEO satellites are considered. A LEO satellite may be visible to a UE on the ground only for a few seconds or minutes. There are two different option for LEO deployment. The beam/cell coverage is fixed with respect to a geographical location with earth-fixed beams, i.e., steerable beams from satellites ensure that a certain beam covers the same geographical area even as the satellite moves in relation to the surface of the earth. On the other hand, with moving beams a LEO satellite has fixed antenna pointing direction in relation to the earth's surface, e.g., perpendicular to the earth's surface, and thus cell/beam coverage sweeps the earth as the satellite moves. In that case, the spotbeam, which is serving the UE, may switch every few seconds.
- Long propagation delays: The propagation delays in terrestrial mobile systems are usually less than 1 millisecond. In contrast, the propagation delays in NTN can be much longer, ranging from several milliseconds (LEO) to hundreds of milliseconds (GEO) depending on the altitudes of the spaceborne or airborne platforms deployed in the NTN.
- Large Doppler shifts: The movements of the spaceborne or airborne platforms deployed in NTN may result in large Doppler shifts. For example, a LEO satellite at the height of 600 km can lead to a time-varying Doppler shift as large as 24 ppm.

Another complicating property of a NTN with earth-fixed cells is that when the responsibility for covering a certain geographical cell area switches from one satellite to another, preferably with a short period of overlap (i.e., both the old and the new satellite cover the cell area simultaneously), this may be assumed to involve a cell change, e.g., change of PCI, which means that all the UEs connected in the old cell (to/via the old satellite) have to be handed over to the new cell (and the new satellite) in a short time (i.e., the period of overlap), which may cause a high load peak on the RACH resources, random access processing resources and processing resources for handover preparation associated with the new cell. If these resources are overloaded, the consequences may involve e.g., extended interruption times, handover failures and radio link failures.

In Rel-16, during the study item phase, RAN2 discussed the mobility procedures to find solutions to address problems that may occur due to the challenges mentioned above for NTN with the motivation to reduce service interruption during handover due to large propagation delay, high handover rates due to moving cells, to introduce mechanisms to improve handover robustness due to small signal strength variation in regions of beam overlap and to compensate for propagation delay differences in the UE measurement windows between cells/beams originating from different satellites. This is especially the case for LEO NTN. In the technical report, which was concluded during the SI phase in Rel-16, aspects related to additional triggering conditions for conditional handover mechanism, adaptation of measurement-based thresholds and events, mobility related configuration, measurement configuration/reporting, and service continuity for mobility between TN and NTN are captured.

In the technical report, the following enhancements to measurement configuration and reporting are captured:

- Conditional triggering of measurement reporting: The triggering of measurement reporting can be based on UE location. This may be based on UE location vs a reference location, or a combination of location and RSRP/RSRQ.
- Inclusion of location information in the measurement report: Location information may be piggy backed onto the measurement report to provide the network additional information when determining whether to HO. Additional design considerations (e.g., signalling overhead impacts and potential privacy concerns) can be addressed in a work item phase.
- Network compensation of propagation delay difference between satellites: The network can compensate for propagation delay differences in the UE measurement window, e.g., via system information, or in a UE specific manner via dedicated signalling. Other solutions to this issue are not precluded.

A general NTN specific measurement report triggering issue is that the RSRP range of neighboring cells are very similar and events like A3 may not trigger in time. For load balancing reasons and country border reasons it is needed that measurement reports trigger timely.

<u>SUMMARY</u>

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. Certain aspects of the present disclosure and their embodiments may provide solutions to these or other challenges. For example, the present disclosure proposes solutions on the detailed aspects of the mechanisms related to measurement report triggering that are not only mentioned in the technical report where detailed design considerations are expected to be addressed in the related work item phase but also mechanisms to address problems that are discovered in addition to what has been captured in the technical report.

According to certain embodiments, a method by a wireless device includes determining whether one or more conditions for triggering measurement reporting have occurred and triggering the measurement reporting based on the occurrence of the one or more conditions. The one or more conditions for triggering the measurement reporting are based on at least one of: a timing advance value in a source cell; detection of an identifier associated with a specific cell.

According to certain embodiments, a wireless device is adapted to determine whether one or more conditions for triggering measurement reporting have occurred and triggering the measurement reporting based on the occurrence of the one or more conditions. The one or more conditions for triggering the measurement reporting are based on at least one of: a timing advance value in a source cell; detection of an identifier associated with a specific cell.

According to certain embodiments, a method by a network node includes indicating, to a wireless device, a measurement configuration and one or more conditions associated with the measurement configuration. The one or more conditions is for triggering measurement reporting based on at least one of: a timing advance value in a source cell; and detection of an identifier associated with a specific cell.

According to certain embodiments, a network node is adapted to indicate, to a wireless device, a measurement configuration and one or more conditions associated with the measurement configuration. The one or more conditions is for triggering measurement reporting based on at least one of: a timing advance value in a source cell; and detection of an identifier associated with a specific cell.

Certain embodiments may provide one or more of the following technical advantage(s). As an example, an advantage of certain embodiments includes the adoption of measurement triggering conditions and event definitions to enhance proper measurement report triggering. Especially, since the RSRP ranges are similar between cells.

Other advantages may be readily apparent to one having skill in the art. Certain embodiments may have none, some, or all of the recited advantages.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 illustrates an example architecture of a satellite network with bent pipe transponders;
FIGURE 2 illustrates an example of the diurnal Doppler shift of the forward service link observed for a GEO satellite operating from an inclined orbit;
FIGURE 3 illustrates six example parameters that can describe a satellite orbit;
FIGURE 4 illustrates a high-level measurement model;
FIGURE 5 illustrates an example wireless network, according to certain embodiments;
FIGURE 6 illustrates an example network node, according to certain embodiments;
FIGURE 7 illustrates an example wireless device, according to certain embodiments;
FIGURE 8 illustrate an example user equipment, according to certain embodiments;
FIGURE 9 illustrates a virtualization environment in which functions implemented by some embodiments may be virtualized, according to certain embodiments;
FIGURE 10 illustrates a telecommunication network connected via an intermediate network to a host computer, according to certain embodiments;
FIGURE 11 illustrates a generalized block diagram of a host computer communicating via a base station with a user equipment over a partially wireless connection, according to certain embodiments;
FIGURE 12 illustrates a method implemented in a communication system, according to one embodiment;
FIGURE 13 illustrates another method implemented in a communication system, according to one embodiment;
FIGURE 14 illustrates another method implemented in a communication system, according to one embodiment;
FIGURE 15 illustrates another method implemented in a communication system, according to one embodiment;
FIGURE 16 illustrates an example method by a wireless device, according to certain embodiments;
FIGURE 17 illustrates an example virtual apparatus, according to certain embodiments;
FIGURE 18 illustrates another example method by a wireless device, according to certain embodiments;
FIGURE 19 illustrates another example virtual apparatus, according to certain embodiments;
FIGURE 20 illustrates an example method by a network node, according to certain embodiments; and
FIGURE 21 illustrates another example virtual apparatus, according to certain embodiments.

DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Note that unless explicitly stated otherwise, the methods proposed below concern both fixed and moving cells, service and feeder link switches. Unless explicitly stated otherwise, the terms "cell" and "beam" are used interchangeably. Unless explicitly stated otherwise, the terms "wireless terminal," "User Equipment," "UE," "wireless device," and "device" are used interchangeably in this document. The terms "source cell" or "target cell" do not refer to the global cell ID in this document assuming that a global cell ID is mapped to a geographical area in a tracking area, which is also defined with respect to a geographical area. Certain embodiments of the solution are described using NR terminology, e.g., using the term "gNB" instead of the more generic and RAT-independent term "radio base station," but this should not be seen as a limitation, as the solution is applicable also to other RATs that may be used in NTNs, such as LTE. Unless it is explicitly stated otherwise, the examples described below concern the following handover mechanisms: "Reconfiguration with sync / Reconfiguration with mobilityInfo," "5.2 Dual Active Protocol Stack (DAPS) handover," "5.3 Conditional handover (CHO)," and "RACH-less handover."

According to certain embodiments, various methods and systems are provided for measurement report triggering that can enhance the measurement reporting for NTN systems. Aspects related to configuring a UE for measurement report triggering are also disclosed.

According to certain embodiments, a method in a device with the triggering of measurement reporting may be based on one or more of the following:

- RSRP/RSRQ, SINR or RSSI threshold(s) which should be exceeded (or a pathloss threshold which the device's experienced or estimated pathloss should be below in order for the channel quality to be sufficient or sufficiently good) in the source cell and/or in neighbour cell(s), e.g., candidate target cell(s),
- device location with respect to a geographically outlined area, e.g., inside or outside, via configuration, where the outlined area may be formulated with geographical coordinates and/or geometrical shape descriptions (including shape defining parameters), i.e., considering the two- or three-dimensional space,
- distance between the device and the satellite node serving the source cell and/or a candidate target cell(s) based on the position of the satellite node(s) known from the ephemeris data,
- the distance or differential delay between the device and the nadir of the satellite node serving the source cell and/or a candidate target cell(s) or any other reference point, which may be specified explicitly or provided via common or dedicated signalling, in two- or three-dimensional space. Note that in a moving cell, the reference point may be moving as the cell is moving, while the reference point maintains its position relative the cell's coverage area. A moving cell's trajectory is predictable based on the serving satellite's ephemeris data and thus, based on this ephemeris data, a UE can continuously keep track of, and relate to, a moving reference point.
- the derivative of the above described distance or differential delay, thus capturing whether the distance or differential delay is growing or shrinking and how fast this change occurs. For instance, a certain distance may trigger a measurement report only if the derivative of the distance indicates that the distance is growing. As another option, measurement reporting is triggered if the derivative of the distance or differential delay exceeds a certain threshold (or goes below a negative threshold, i.e., has a greater negative value than the negative threshold).
- One example of defining the entry condition for the measurement event can be expressed with center location of the beam or cell and a radius. Another option is an elliptic shape with center and two radius. This may be absolute or it may move along with the cell. Or a radius, or in case of elliptic shape one or both of the radius may change as the satellite moves/elevation angle changes. It may be defined respective to the serving cell such that the entry condition is valid when UE moves outside of the circle/ellipse defined by the radius. Or, it may be defined with respect to the target cell such that event entry condition is fulfilled when UE steps in the area. Then, the event needs a time to trigger (TTT) that defines for how long the UE needs to be located on certain side of the defined event entry condition, that is, for how long the entry condition is valid for the UE before the actual event triggers. Likewise, there is a need to define the leaving condition in case the UE leaves the area that is counted towards the entry condition. For this, a hysteresis is needed to avoid ping pong effect. Note that the needs for entry condition, TTT, leaving condition as well as the hysteresis apply to all measurement triggering conditions mentioned in this disclosure.

- expected time to be served (as defined in TR 38.821) in the source cell and/or in a candidate target cell(s),
- elevation angle of the satellite serving the source cell and/or candidate target cell(s),
- the derivative of the elevation angle of the satellite serving the source cell or the candidate target cell(s),
- UTC time or timer configured by the network, where start of the timer can be associated with a certain subframe such as the first subframe of a H-SFN in which the configuration message is transmitted by the network or received by the device and/or timer expiry is associated with approaching service link or feeder link switch,
- number of cells triggering an event that may be one of the existing events or one of the events presented in here,
- a specific cell/PCI or a cell from a specific satellite that triggers an event. This may be for example one of the PCIs configured as a list on the UE's measurement configuration.
- timing advance value in the source cell and/or in a candidate target cell(s),
- various combinations of those listed above.

In a particular embodiment, the network may configure a UE with one or more measurement configuration(s) and an associated condition for when the measurement configuration(s) should be activated. Such a condition could be based on the UE's position, e.g., a condition that is fulfilled when the UE is in an area where HO to a neighbor cell may be relevant to consider, e.g., an area where the probability that a measurement report from the UE would trigger the gNB to initiate HO for the UE to a neighbor cell is non-negligible or significant. Typically, such an area would be an area in proximity with an assumed cell border. Such an area (in a broad sense) could be defined, for example, in terms of the UE's distance from the cell center (e.g., the satellite's nadir in the case of a moving cell, or a reference point which is defined to represent the cell center) or in terms of the UE's distance from the cell border (where the cell border could be defined in terms of geographical and/or geometrical parameters). Note that in a moving cell, a reference point, or a defined area, may be moving as the cell is moving, while the reference point, or area, maintains its position relative the cell's coverage area. A moving cell's trajectory is predictable based on the serving satellite's ephemeris data and, thus, based on this ephemeris data a UE can continuously keep track of and relate to a moving reference point or defined area. Conditions other than those based only on the UE's position are also conceivable for triggering measurement reporting. According to certain embodiments, the UE monitors the condition and, when it is fulfilled, the UE activates the associated measurement configuration and starts to perform measurements accordingly. If the configured measurements require measurement gaps (e.g., inter-frequency measurements), the UE may notify the network that the condition has been fulfilled so that the network should start to honor the measurement gaps (which preferably were configured in the measurement configuration that now has been activated). Until the gNB receives this notification from the UE, the gNB ignores the measurement gaps and does not refrain from scheduling the UE at times covered by the configured (but passive) measurement gaps. The notification from the UE can be in the form of a MAC CE or an RRC message. Optionally, the gNB can acknowledge the notification (and thus confirm that it will start to honor the configured (and now activated) measurement gaps. Such an acknowledgement should preferable be sent on the same protocol layer as the notification such as, for example, using a MAC CE to acknowledge a notification in a MAC CE or using an RRC message to acknowledge a notification sent in an RRC message.

In a particular embodiment, the network may configure a UE with one or more inactive measurement configuration(s). Such a measurement configuration would remain inactive until it is activated by the network. Such activation could be performed, for example, by sending a MAC CE to the UE (which the UE, as one option, may acknowledge with a MAC CE) or by sending an RRC message (which the UE, as one option, may acknowledge with an RRC message). To facilitate for the gNB to choose a suitable occasion for activation of an inactive measurement configuration in the UE, the UE may be configured to send reports to the gNB, indicating the UE's position. The UE may be configured to transmit such position reports periodically or when the position has changed a certain distance since the last report (or a combination of both such as, for example, sending a report when the position has changed significantly or a certain maximum time has elapsed since the last report was sent, whichever happens first). Other conditions for sending UE location reports that are not based only on the UE's position are also conceivable, e.g., the conditions listed above for triggering measurement reporting.

In a particular embodiment, the network may configure a UE to report its location to the network such as, for example, to the gNB, either periodically or when the UE's location has changed a certain distance since the last report (or a combination of a distance-based and a time-based condition, e.g., sending a location report when the location has changed significantly or a certain maximum time has elapsed since the last report was sent, whichever happens first). Yet another location reporting condition could be that the UE is configured to report its location when the UE has entered a certain area (in a broad sense). Such an area (in a broad sense) could be defined, for example, in terms of the UE's distance from the cell center (e.g., the satellite's nadir in the case of a moving cell, or a reference point which is defined to represent the cell center) or in terms of the UE's distance from the cell border (where the cell border could be defined in terms of geographical and/or geometrical parameters). Based on the reported UE location, the gNB creates a suitable measurement configuration such as, for example, based on the UE's current location, including measurements on neighbor cells that are relevant at the UE's current location, and sends the measurement configuration to the UE. The UE starts to act in accordance with the receive measurement configuration. With this approach, the measurement configuration could be streamlined in the sense that it could be limited to measurements on one or a small set of neighbor cell(s), which can be assumed to provide a sufficiently good channel quality at the UE's current location (or which may be assumed to have the potential to soon provide a sufficiently good channel quality for the UE, e.g., if the UE moves a small distance further in the direction of a concerned neighbor cell or, the case of moving cells, the concerned neighbor cell(s) has/have moved a small distance closer to the UE).In a particular embodiment, the network may adapt the regular procedures and/or configurations in various ways to address the potential issue that measurements performed on LEO satellites may quickly become irrelevant due to the fast movements of the satellites. For instance:

○ The network can configure a shorter time to trigger (TTT) in situations where the concerned satellite's speed relative to the UE (in particular how fast the size of the distance between the UE and the satellite changes) is high.
○ The network may also associate a requirement with the measurement configuration, which states that after a measurement report triggering condition has been fulfilled, the UE must transmit the report to the network (or request transmission resources for the report, e.g., by sending a scheduling request to the gNB) within a certain minimum time.
○ The network may also configure the UE to perform more frequent measurements (which may involve more frequent measurement gaps, when measurement gaps are needed, e.g., when inter-frequency measurements are configured), when the distance between the UE and the concerned satellite (which the UE is configured to measure on) changes fast.
○ The network may also configure the UE to collect fewer measurement samples for each measurement (e.g., base an average based measurement result on fewer samples), when the distance between the UE and the concerned satellite (which the UE is configured to measure on) changes fast.
○ Yet another means to counteract that a measurement result becomes irrelevant (or partly outdated with uncertain accuracy) before it can be used for its intended purpose could be that the concerned measurement and measurement reporting properties are scaled with the speed of change of the distance between the UE and the concerned satellite. Properties that may be scaled include (at least):

■ the TTT (which could be smaller the faster the UE-satellite distance changes),
■ the frequency of measurements (which could be greater the faster the UE-satellite distance changes),
■ the number of samples a measurement result is based on (which could be smaller the faster the UE-satellite distance changes), and
■ the maximum allowed time (if any) between the fulfilment of a measurement reporting trigger condition and the transmission of the report (or request of transmission resources for the report) (which could be smaller the faster the UE-satellite distance changes).

In a particular embodiment, the device may send a notification to the network such as, for example, in MAC layer, to indicate that measurement reports have been triggered and thus there is a need for gaps to be activated (assuming that measurement gaps have already been configured via RRC earlier). In another particular embodiment, this indication from the device may also trigger a need to provide the UE measurement configuration on the network side. Previously configured gaps can be used, and the measurement configuration can be activated immediately if provided earlier via dedicated signaling.

Throughout this disclosure, the terms "beam" and "cell" may be used interchangeably, unless explicitly noted otherwise. Although certain embodiments have been described with reference to NTN, the methods proposed apply to any wireless network (e.g., any wireless network dominated by line-of-sight conditions). Certain embodiments (or portions thereof) may be implemented in one or more standards, such as 3GPP release 17+, 3GPP TS 38.331, and/or NR TR 38.821 Rel-16.

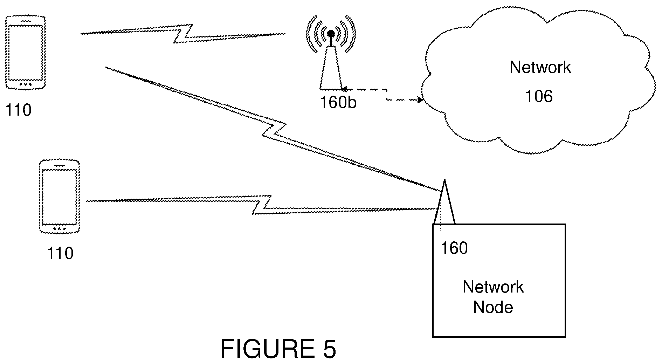

Although the subject matter described herein may be implemented in any appropriate type of system using any suitable components, the embodiments disclosed herein are described in relation to a wireless network, such as the example wireless network illustrated in FIGURE 5. For simplicity, the wireless network of FIGURE 5 only depicts network 106, network nodes 160 and 160b, and WDs 110. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

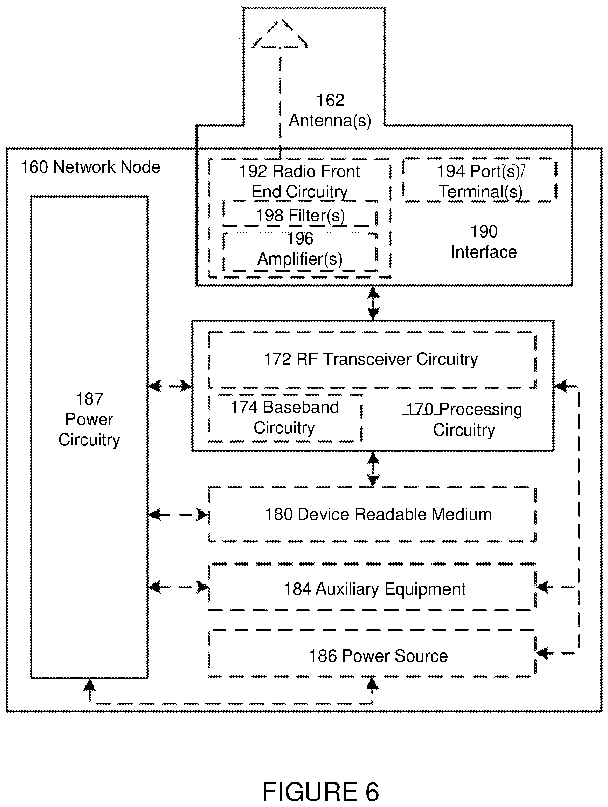

FIGURE 6 illustrates an example network node 160, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 6, network node 160 includes processing circuitry 170, device readable medium 180, interface 190, auxiliary equipment 184, power source 186, power circuitry 187, and antenna 162. Although network node 160 illustrated in the example wireless network of FIGURE 6 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 6 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

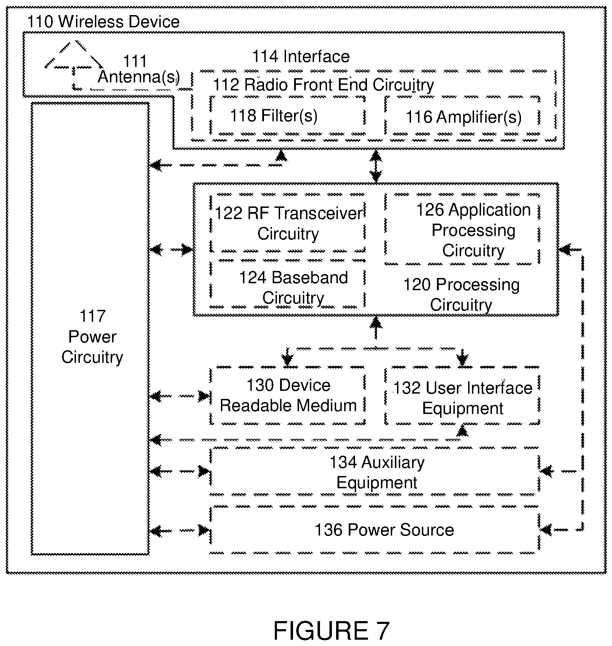

FIGURE 7 illustrates an example WD 110, according to certain embodiments. As used herein, WD) refers to a device capable, configured, arranged and/or operable to communicate wirelessly with network nodes and/or other wireless devices. Unless otherwise noted, the term WD may be used interchangeably herein with UE. Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

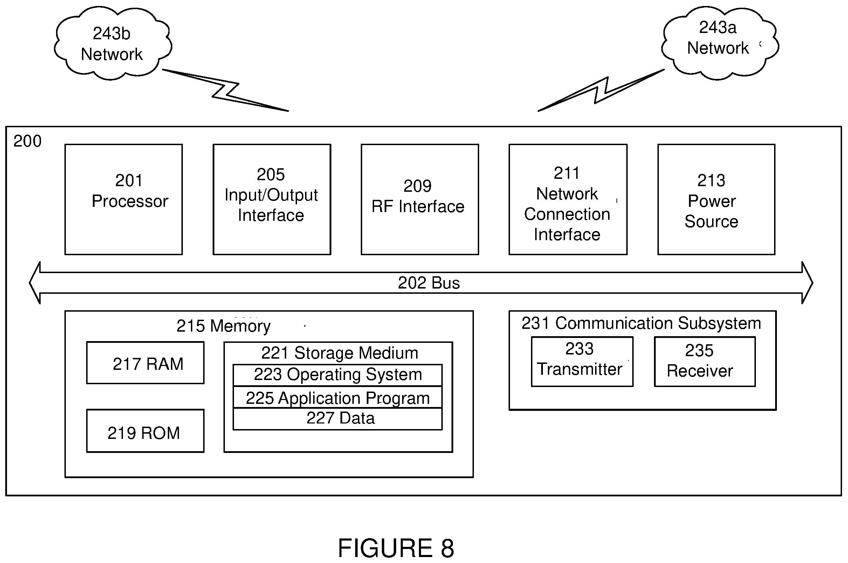

FIGURE 8 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3rd Generation Partnership Project (3GPP), including a NB-IoT UE, a machine type communication (MTC) UE, and/or an enhanced MTC (eMTC) UE. UE 200, as illustrated in FIGURE 8, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIGURE 8 is a UE, the components discussed herein are equally applicable to a WD, and vice-versa.

In FIGURE 8, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may utilize all of the components shown in FIGURE 8, or only a subset of the components. The level of integration between the components may vary from one UE to another UE. Further, certain UEs may contain multiple instances of a component, such as multiple processors, memories, transceivers, transmitters, receivers, etc.

In FIGURE 8, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 8, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 8, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g.,

frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

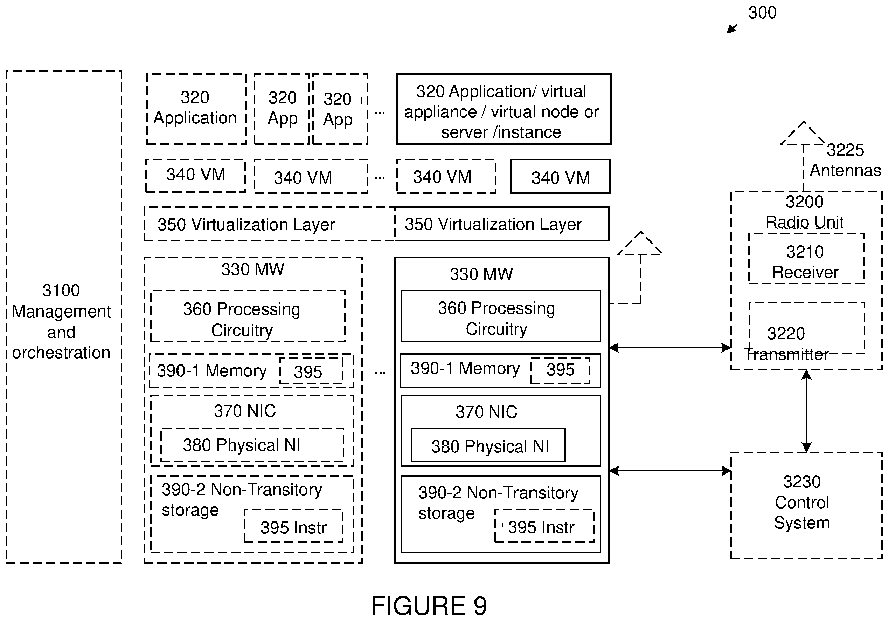

FIGURE 9 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 9, hardware 330 may be a standalone network node with generic or specific components. Hardware 330 may comprise antenna 3225 and may implement some functions via virtualization. Alternatively, hardware 330 may be part of a larger cluster of hardware (e.g., such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 9.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

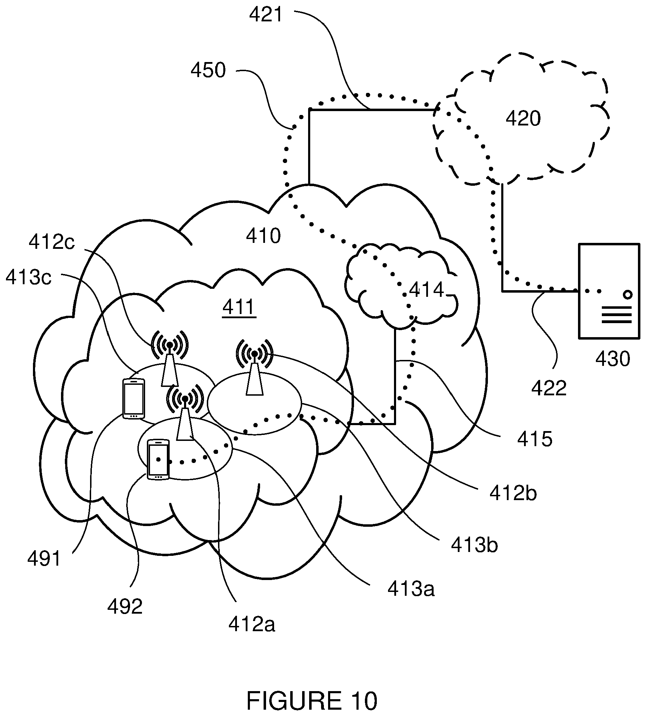

FIGURE 10 illustrates a telecommunication network connected via an intermediate network to a host computer, according to certain embodiments. With reference to FIGURE 10, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 10 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

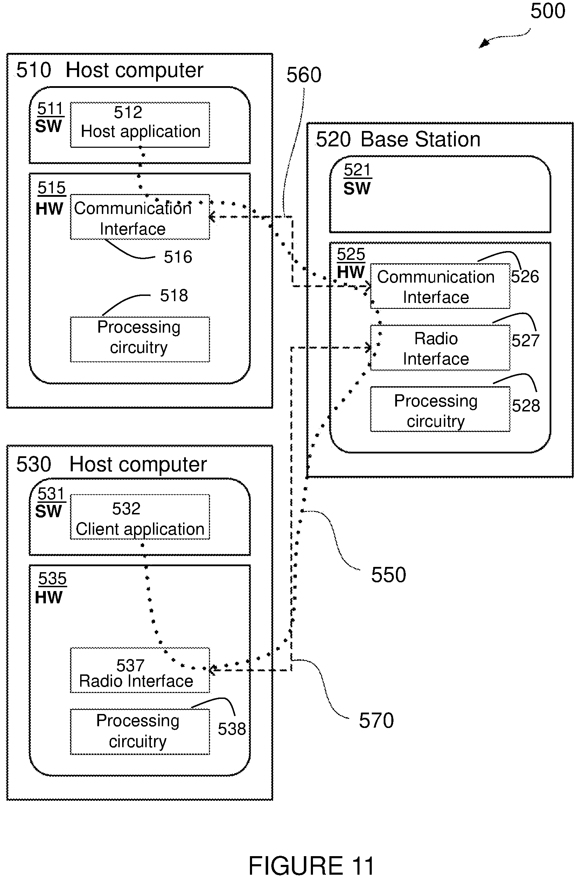

FIGURE 11 illustrates a generalized block diagram of a host computer communicating via a base station with a user equipment over a partially wireless connection, according to certain embodiments. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 11) served by base station 520. Communication interface 526 may be configured to facilitate connection 560 to host computer 510. Connection 560 may be direct or it may pass through a core network (not shown in FIGURE 11) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 11 may be similar or identical to host computer 430, one of base stations 412a, 412b, 412c and one of UEs 491, 492 of FIGURE 10, respectively. This is to say, the inner workings of these entities may be as shown in FIGURE 11 and independently, the surrounding network topology may be that of FIGURE 10 .

In FIGURE 11, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the power consumption and thereby provide benefits such as extended battery lifetime.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

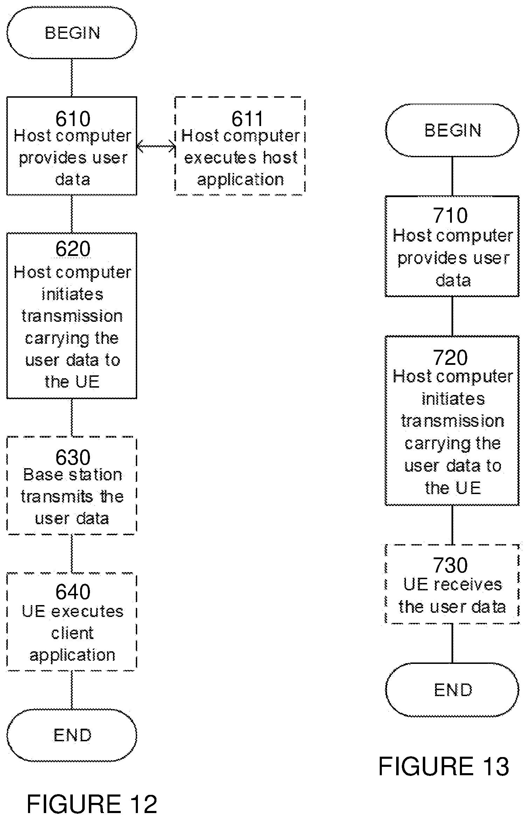

FIGURE 12 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 12 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 13 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 13 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

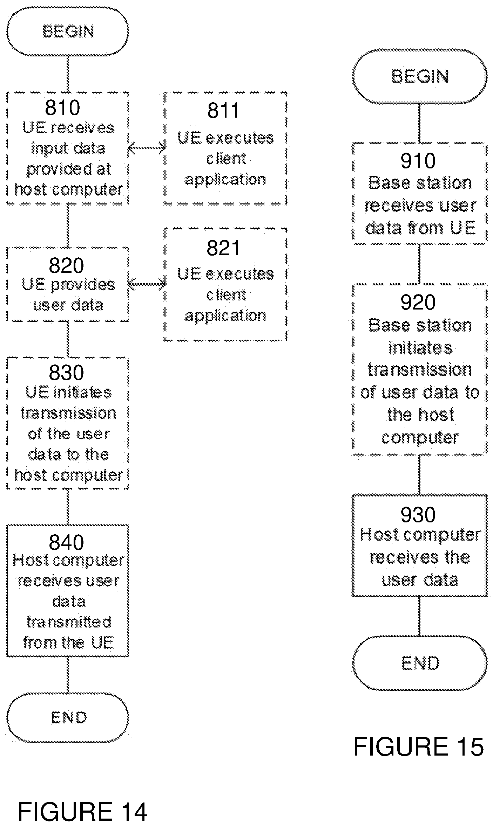

FIGURE 14 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 14 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 15 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 15 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

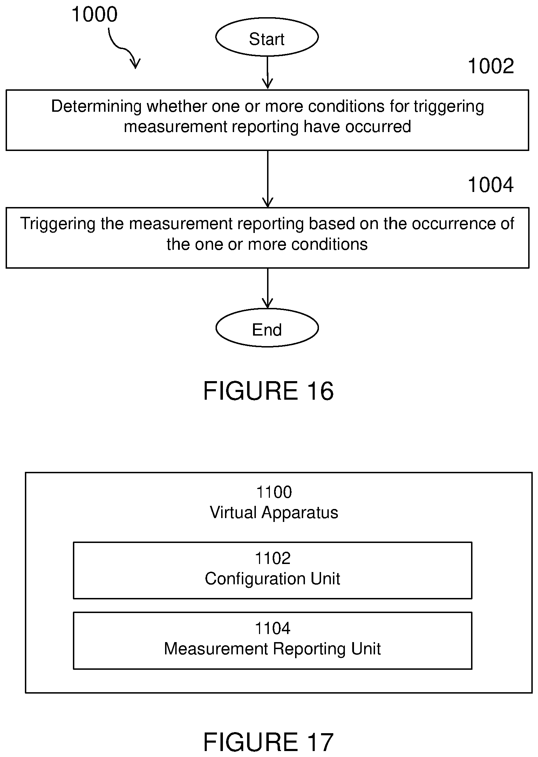

FIGURE 16 depicts a method 1000 in accordance with particular embodiments. In certain embodiments, the method may be implemented by a wireless device, such as wireless device 110 (e.g., UE 200) discussed above. For example, the wireless device may comprise processing circuitry 120 (e.g., processing circuitry 201) configured to execute a computer program that causes the wireless device to perform the method. The method begins at step 1002 with determining whether one or more conditions for triggering measurement reporting have occurred and proceeds to step 1004 with triggering the measurement reporting based on the occurrence of the one or more conditions.

FIGURE 17 illustrates a schematic block diagram of an apparatus 1100 in a wireless network (for example, the wireless network shown in FIGURE 5). The apparatus may be implemented in a wireless device or network node (e.g., wireless device 110 or network node 160 shown in FIGURE 5). Apparatus 1100 is operable to carry out the example method described with reference to FIGURE 16 and possibly any other processes or methods disclosed herein. It is also to be understood that the method of FIGURE 16 is not necessarily carried out solely by apparatus 1100. At least some operations of the method can be performed by one or more other entities.

Virtual Apparatus 1100 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause configuration unit 1102 and measurement reporting unit 1104, and any other suitable units of apparatus 1100 to perform corresponding functions according one or more embodiments of the present disclosure.

As illustrated in FIGURE 17, apparatus 1100 includes configuration unit 1102 and measurement reporting unit 1104. Configuration unit 1102 is configured to configure one or more conditions to be monitored by the wireless device. In some embodiments, one or more of the conditions may be configured based on a measurement configuration received from a network. Configuration unit 1102 detects the occurrence of the one or more conditions and sends an indication triggering measurement reporting unit 1104 to report measurements to the network. Measurement reporting unit 1104 is configured to perform measurements and report the measurements to the network.

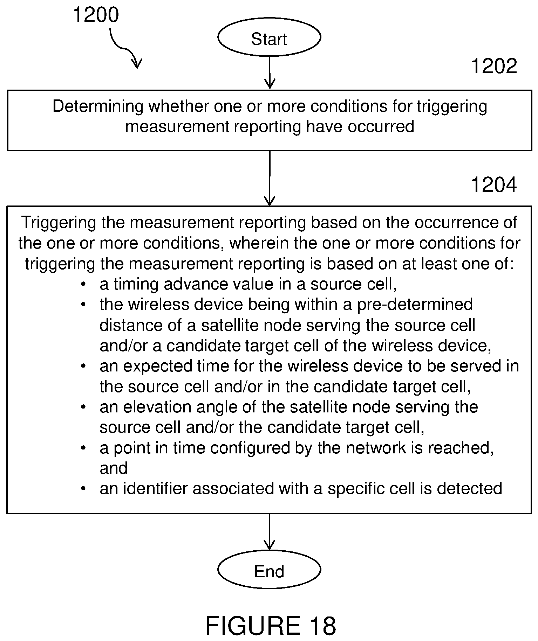

FIGURE 18 illustrates another method 1200 by a wireless device 110, according to certain embodiments. At step 1202, the wireless device 110 determines whether one or more conditions for triggering measurement reporting have occurred. The one or more conditions for triggering the measurement reporting are based on at least one of: a timing advance value in a source cell; the wireless device being within a pre-determined distance of a satellite node serving the source cell and/or a candidate target cell of the wireless device; an expected time for the wireless device to be served in the source cell and/or in the candidate target cell; an elevation angle of the satellite node serving the source cell and/or the candidate target cell; a point in time configured by the network is reached; and detection of an identifier associated with a specific cell.

At step 1204, the wireless devices triggers the measurement reporting based on the occurrence of the one or more conditions.

In a particular embodiment, the triggering of the measurement reporting is based at least in part on determining that a channel quality exceeds a threshold.

In a particular embodiment, the triggering of the measurement reporting is based at least in part on determining that an estimated pathloss is below a threshold.

In a particular embodiment, the triggering of the measurement reporting is based at least in part on determining that the wireless device 110 is located within a geographically outlined area.

In a particular embodiment, the triggering of the measurement reporting is based at least in part on detecting the occurrence of the one or more conditions with respect to at least a minimum number of cells.

In a particular embodiment, the wireless device 110 receives, from the network node 160, information indicating a measurement configuration and at least one associated condition for when the wireless device 110 should activate the measurement configuration. The wireless device 110 activates the measurement configuration based on determining that the at least one associated condition has been met.

In a particular embodiment, the wireless device 110 receives, from the network node, information indicating an inactive measurement configuration and abstains from triggering the inactive measurement configuration until it is activated by a network.

In a further particular embodiment, the wireless device 110 receives, from the network node 160, an indication to activate the inactive measurement configuration. In response to receiving the indication, the wireless device 110 activates the inactive measurement configuration.

In a particular embodiment, the wireless device 110 sends, to the network node 160, an indication that the measurement reporting has been triggered.

In a particular embodiment, the wireless device 110 receives a location reporting configuration from the network node 160 and reports a location of the wireless device 110 to the network node 160 according to the location reporting configuration.

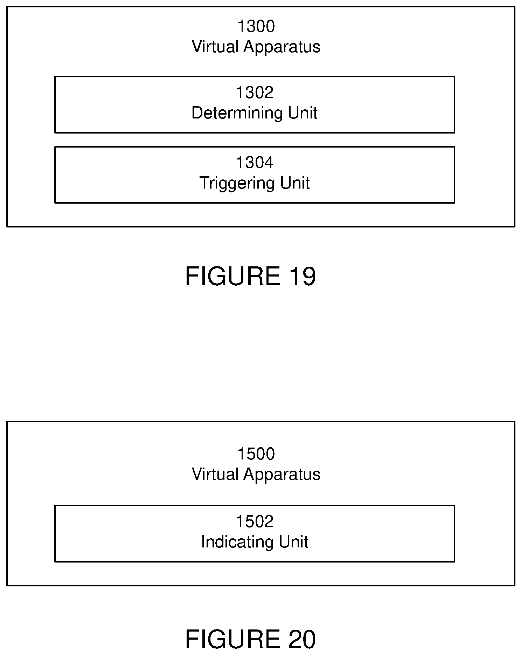

FIGURE 19 illustrates a schematic block diagram of a virtual apparatus 1300 in a wireless network (for example, the wireless network shown in FIGURE 5). The apparatus may be implemented in a wireless device or network node (e.g., wireless device 110 or network node 160 shown in FIGURE 5). Apparatus 1300 is operable to carry out the example method described with reference to FIGURE 18 and possibly any other processes or methods disclosed herein. It is also to be understood that the method of FIGURE 18 is not necessarily carried out solely by apparatus 1300. At least some operations of the method can be performed by one or more other entities.

Virtual Apparatus 1300 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause determining unit 1302, triggering unit 1304, and any other suitable units of virtual apparatus 1300 to perform corresponding functions according one or more embodiments of the present disclosure.

According to certain embodiments, determining unit 1302 may perform certain of the determining functions of the virtual apparatus 1300. For example, determining unit 1302 may determine whether one or more conditions for triggering measurement reporting have occurred. The one or more conditions for triggering the measurement reporting are based on at least one of: a timing advance value in a source cell; the wireless device being within a pre-determined distance of a satellite node serving the source cell and/or a candidate target cell of the wireless device; an expected time for the wireless device to be served in the source cell and/or in the candidate target cell; an elevation angle of the satellite node serving the source cell and/or the candidate target cell; a point in time configured by the network is reached; and detection of an identifier associated with a specific cell.

According to certain embodiments, triggering unit 1304 may perform certain of the triggering functions of the virtual apparatus 1300. For example, triggering unit 1304 may trigger the measurement reporting based on the occurrence of the one or more conditions.

FIGURE 20 illustrates a method 1400 by a network node 160 such as, for example, a base station, according to certain embodiments. At step 1402, the network node 160 indicates, to a wireless device 110, a measurement configuration and one or more conditions associated with the measurement configuration. The one or more conditions for triggering measurement reporting are based on at least one of: a timing advance value in a source cell; the wireless device 110 being within a pre-determined distance of a satellite node serving the source cell and/or a candidate target cell of the wireless device 110; an expected time for the wireless device 110 to be served in the source cell and/or in the candidate target cell; an elevation angle of the satellite node serving the source cell and/or the candidate target cell; a point in time configured by the network is reached; and detection of an identifier associated with a specific cell.

In a particular embodiment, the one or more conditions indicate to trigger the measurement reporting based at least in part on the wireless device 110 determining that a channel quality exceeds a threshold.

In a particular embodiment, the one or more conditions indicate to trigger the measurement reporting based at least in part on the wireless device 110 determining that an estimated pathloss is below a threshold.

In a particular embodiment, the one or more conditions indicate to trigger the measurement reporting based at least in part on the wireless device 110 determining that the wireless device is located within a geographically outlined area.

In a particular embodiment, the one or more conditions indicate to trigger the measurement reporting based at least in part on detecting an occurrence of the one or more conditions with respect to at least a minimum number of cells.

In a particular embodiment, the one or more conditions indicate to trigger the measurement reporting based at least in part on the wireless device 110 detecting an identifier associated with a specific cell.

In a particular embodiment, the network node 160 receives, from the wireless device 110, one or more measurements based on the measurement configuration and performs an operation of the network node 160 based on the one or more measurements.

In a particular embodiment, the network node 160 receives an indication that the measurement reporting has been triggered by the wireless device and, in response to receiving the indication that the measurement reporting has been triggered, activates measurement gaps.

In a particular embodiment, the network node 160 determines a location reporting configuration to be applied by the wireless device 110, sends the location reporting configuration to the wireless device 110, and receives location reporting information from the wireless device 110 based on the location reporting configuration.

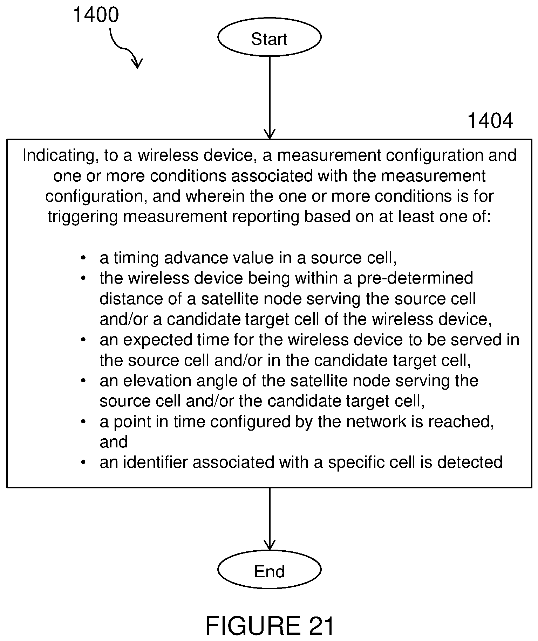

FIGURE 21 illustrates a schematic block diagram of a virtual apparatus 1500 in a wireless network (for example, the wireless network shown in FIGURE 5). The apparatus may be implemented in a wireless device or network node (e.g., wireless device 110 or network node 160 shown in FIGURE 5). Apparatus 1500 is operable to carry out the example method described with reference to FIGURE 20 and possibly any other processes or methods disclosed herein. It is also to be understood that the method of FIGURE 20 is not necessarily carried out solely by virtual apparatus 1500. At least some operations of the method can be performed by one or more other entities.

Virtual Apparatus 1500 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause indicating unit 1502 and any other suitable units of virtual apparatus 1500 to perform corresponding functions according one or more embodiments of the present disclosure.

According to certain embodiments, indicating unit 1502 may perform certain of the indicating functions of the virtual apparatus 1500. For example, indicating unit 1502 may indicate, to a wireless device 110, a measurement configuration and one or more conditions associated with the measurement configuration. The one or more conditions for triggering measurement reporting are based on at least one of: a timing advance value in a source cell; the wireless device 110 being within a pre-determined distance of a satellite node serving the source cell and/or a candidate target cell of the wireless device 110; an expected time for the wireless device 110 to be served in the source cell and/or in the candidate target cell; an elevation angle of the satellite node serving the source cell and/or the candidate target cell; a point in time configured by the network is reached; and detection of an identifier associated with a specific cell.

As used herein, the term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In some embodiments a computer program, computer program product or computer readable storage medium comprises instructions which when executed on a computer perform any of the embodiments disclosed herein. In further examples the instructions are carried on a signal or carrier and which are executable on a computer wherein when executed perform any of the embodiments disclosed herein.

## Claims

1.  A method (1200) performed by a wireless device (110), the method comprising:

    determining (1202) whether one or more conditions for triggering measurement reporting have occurred; and
    triggering (1204) the measurement reporting based on the occurrence of the one or more conditions, and
    wherein the one or more conditions for triggering the measurement reporting is based on at least one of:

    a timing advance value in a source cell, and
    detection of an identifier associated with a specific cell.

2.  The method of Claim 1, wherein triggering the measurement reporting is based at least in part on determining that a channel quality exceeds a threshold.

3.  The method of any one of Claims 1 to 2, wherein triggering the measurement reporting is based at least in part on determining that an estimated pathloss is below a threshold.

4.  The method of any one of Claims 1 to 3, wherein triggering the measurement reporting is based at least in part on determining that the wireless device is located within a geographically outlined area.

5.  The method of any one of Claims 1 to 4, wherein triggering the measurement reporting is based at least in part on detecting the occurrence of the one or more conditions with respect to at least a minimum number of cells.

6.  The method of any one of Claims 1 to 5, further comprising:

    receiving, from the network node, information indicating a measurement configuration and at least one associated condition for when the wireless device should activate the measurement configuration; and
    activating the measurement configuration based on determining that the at least one associated condition has been met.

7.  The method of any one of Claims 1 to 6, further comprising:

    receiving, from the network node, information indicating an inactive measurement configuration; and
    abstaining from triggering the inactive measurement configuration until it is activated by a network.

8.  The method of Claim 7, further comprising:

    receiving, from the network node, an indication to activate the inactive measurement configuration, and
    in response to receiving the indication, activating the inactive measurement configuration.

9. The method of any one of Claims 1 to 8, further comprising sending, to the network node, an indication that the measurement reporting has been triggered.

10. The method of any one of Claims 1 to 9, further comprising:

   receiving a location reporting configuration from the network node; and
   reporting a location of the wireless device to the network node according to the location reporting configuration.

11. A method (1400) performed by a network node (160), the method comprising:

   indicating (1402), to a wireless device (110), a measurement configuration and one or more conditions associated with the measurement configuration, and
   wherein the one or more conditions is for triggering measurement reporting based on at least one of:

      a timing advance value in a source cell, and
      detection of an identifier associated with a specific cell.

12. The method of Claim 11, wherein the one or more conditions indicate to trigger the measurement reporting based at least in part on the wireless device determining that a channel quality exceeds a threshold.

13. The method of any one of Claims 11 to 12, wherein the one or more conditions indicate to trigger the measurement reporting based at least in part on the wireless device determining that an estimated pathloss is below a threshold.

14. The method of any one of Claims 11 to 13, wherein the one or more conditions indicate to trigger the measurement reporting based at least in part on the wireless device determining that the wireless device is located within a geographically outlined area.

15. The method of any one of Claims 11 to 14, wherein the one or more conditions indicate to trigger the measurement reporting based at least in part on detecting an occurrence of the one or more conditions with respect to at least a minimum number of cells.

16. The method of any one of Claims 11 to 15, wherein the one or more conditions indicate to trigger the measurement reporting based at least in part on the wireless device detecting an identifier associated with a specific cell.

17. The method of any one of Claims 11 to 16, further comprising:

   receiving, from the wireless device, one or more measurements based on the measurement configuration; and
   performing an operation of the network node based on the one or more measurements.

18. The method of any one of Claims 11 to 17, further comprising:

   receiving an indication that the measurement reporting has been triggered by the wireless device, and
   in response to receiving the indication that the measurement reporting has been triggered, activating measurement gaps.

19. The method of any one of Claims 11 to 18, further comprising:

   determining a location reporting configuration to be applied by the wireless device;
   sending the location reporting configuration to the wireless device;
   receiving location reporting information from the wireless device based on the location reporting configuration.

20. A wireless device (110) adapted to:

   determine whether one or more conditions for triggering measurement reporting have occurred; and
   trigger the measurement reporting based on the occurrence of the one or more conditions, and
   wherein triggering the measurement reporting is based on at least one of:

      a timing advance value in a source cell, and

detection of an identifier associated with a specific cell.

21. A network node (160) adapted to:

indicate, to a wireless device (110), a measurement configuration and one or more conditions associated with the measurement configuration, and
wherein the one or more conditions is for triggering measurement reporting based on at least one of:

a timing advance value in a source cell, and
detection of an identifier associated with a specific cell.


**Patentansprüche**

1. Verfahren (1200), das von einer drahtlosen Vorrichtung (110) durchgeführt wird, wobei das Verfahren Folgendes umfasst:

Bestimmen (1202), ob eine oder mehrere Bedingungen zum Auslösen einer Messungsmeldung eingetreten sind; und
Auslösen (1204) der Messungsmeldung basierend auf dem Eintreten der einen oder der mehreren Bedingungen, und
wobei die eine oder die mehreren Bedingungen zum Auslösen der Messungsmeldung auf mindestens einem von Folgendem basieren:

einem Zeitvorstellwert in einer Quellzelle und
der Erkennung einer Kennung, die mit einer spezifischen Zelle assoziiert ist.

2. Verfahren nach Anspruch 1, wobei das Auslösen der Messungsmeldung zumindest teilweise auf einem Bestimmen basiert, dass eine Kanalqualität einen Schwellenwert überschreitet.

3. Verfahren nach einem der Ansprüche 1 bis 2, wobei das Auslösen der Messungsmeldung zumindest teilweise auf einem Bestimmen basiert, dass ein geschätzter Pfadverlust unter einem Schwellenwert liegt.

4. Verfahren nach Anspruch 1 bis 3, wobei das Auslösen der Messungsmeldung zumindest teilweise auf einem Bestimmen basiert, dass sich die drahtlose Vorrichtung innerhalb eines geografisch abgegrenzten Gebiets befindet.

5. Verfahren nach Anspruch 1 bis 4, wobei das Auslösen der Messungsmeldung zumindest teilweise auf einem Erkennen des Eintretens der einen oder der mehreren Bedingungen in Bezug auf mindestens eine Mindestanzahl von Zellen basiert.

6. Verfahren nach einem der Ansprüche 1 bis 5, ferner umfassend:

Empfangen von Informationen vom Netzwerkknoten, die eine Messkonfiguration und mindestens eine assoziierte Bedingung dafür angeben, wann die drahtlose Vorrichtung die Messkonfiguration aktivieren sollte; und
Aktivieren der Messkonfiguration basierend auf einem Bestimmen, dass die mindestens eine assoziierte Bedingung erfüllt wurde.

7. Verfahren nach einem der Ansprüche 1 bis 6, ferner umfassend:

Empfangen von Informationen vom Netzwerkknoten, die eine inaktive Messkonfiguration angeben; und
Verzichten auf das Auslösen der inaktiven Messkonfiguration, bis sie von einem Netzwerk aktiviert wird.

8. Verfahren nach Anspruch 7, ferner umfassend:

Empfangen einer Angabe vom Netzwerkknoten, dass die inaktive Messkonfiguration aktiviert werden soll, und in Reaktion auf das Empfangen der Angabe Aktivieren der inaktiven Messkonfiguration.

9. Verfahren nach einem der Ansprüche 1 bis 8, ferner umfassend Senden einer Angabe, dass die Messungsmeldung ausgelöst wurde, an den Netzwerkknoten.

10. Verfahren nach einem der Ansprüche 1 bis 9, ferner umfassend:

Empfangen einer Standortmeldungskonfiguration vom Netzwerkknoten; und
Melden eines Standorts der drahtlosen Vorrichtung an den Netzwerkknoten gemäß der Standortmeldungskonfiguration.

11. Verfahren (1400), das von einem Netzwerkknoten (160) durchgeführt wird, wobei das Verfahren Folgendes umfasst:

Angeben (1402) einer Messkonfiguration und einer oder mehrerer Bedingungen, die mit der Messkonfiguration assoziiert sind, für eine drahtlose Vorrichtung (110) und
wobei die eine oder die mehreren Bedingungen zum Auslösen der Messungsmeldung basierend auf mindestens einem von Folgendem sind:

einem Zeitvorstellwert in einer Quellzelle und
der Erkennung einer Kennung, mit einer spezifischen Zelle assoziiert ist.

12. Verfahren nach Anspruch 11, wobei die eine oder die mehreren Bedingungen angeben, dass die Messungsmeldung zumindest teilweise basierend darauf ausgelöst werden soll, dass die drahtlose Vorrichtung bestimmt, dass eine Kanalqualität einen Schwellenwert überschreitet.

13. Verfahren nach einem der Ansprüche 11 bis 12, wobei die eine oder die mehreren Bedingungen angeben, dass die Messungsmeldung zumindest teilweise basierend darauf ausgelöst werden soll, dass die drahtlose Vorrichtung bestimmt, dass ein geschätzter Pfadverlust unter einem Schwellenwert liegt.

14. Verfahren nach einem der Ansprüche 11 bis 13, wobei die eine oder die mehreren Bedingungen angeben, dass die Messungsmeldung zumindest teilweise basierend darauf ausgelöst werden soll, dass die drahtlose Vorrichtung bestimmt, dass sich die drahtlose Vorrichtung innerhalb eines geografisch abgegrenzten Gebiets befindet.

15. Verfahren nach einem der Ansprüche 11 bis 14, wobei die eine oder die mehreren Bedingungen angeben, dass die Messungsmeldung zumindest teilweise basierend auf einem Erkennen eines Eintretens der einen oder der mehreren Bedingungen in Bezug auf mindestens eine Mindestanzahl von Zellen ausgelöst werden soll.

16. Verfahren nach einem der Ansprüche 11 bis 15, wobei die eine oder die mehreren Bedingungen angeben, dass die Messungsmeldung zumindest teilweise basierend darauf ausgelöst werden soll, dass die drahtlose Vorrichtung eine Kennung erkennt, die mit einer spezifischen Zelle assoziiert ist.

17. Verfahren nach einem der Ansprüche 11 bis 16, ferner umfassend:

Empfangen einer oder mehrerer Messungen von der drahtlosen Vorrichtung basierend auf der Messkonfiguration; und
Durchführen einer Operation des Netzwerkknotens basierend auf der einen oder den mehreren Messungen.

18. Verfahren nach einem der Ansprüche 11 bis 17, ferner umfassend:
Empfangen einer Angabe, dass die Messungsmeldung von der drahtlosen Vorrichtung ausgelöst wurde, und in Reaktion auf den Empfang der Angabe, dass die Messmeldung ausgelöst wurde, Aktivieren von Messlücken.

19. Verfahren nach einem der Ansprüche 11 bis 18, ferner umfassend:

Bestimmen einer Standortmeldungskonfiguration, die von der drahtlosen Vorrichtung angewendet werden soll;
Senden einer Standortmeldungskonfiguration an die drahtlose Vorrichtung;
Empfangen von Standortmeldungsinformationen von der drahtlosen Vorrichtung basierend auf der Standortmeldungskonfiguration.

20. Drahtlose Vorrichtung (110), die zu Folgendem ausgelegt ist:

Bestimmen, ob eine oder mehrere Bedingungen zum Auslösen einer Messungsmeldung eingetreten sind; und

Auslösen der Messungsmeldung basierend auf dem Eintreten der einen oder der mehreren Bedingungen, und wobei das Auslösen der Messungsmeldung auf mindestens einem von Folgendem basiert:

einem Zeitvorstellwert in einer Quellzelle und
der Erkennung einer Kennung, mit einer spezifischen Zelle assoziiert ist.

**21.** Netzwerkknoten (160), der zu Folgendem ausgelegt ist:

Angeben einer Messkonfiguration und einer oder mehrerer Bedingungen, die mit der Messkonfiguration assoziiert sind, für eine drahtlose Vorrichtung (110), und
wobei die eine oder die mehreren Bedingungen zum Auslösen der Messungsmeldung basierend auf mindestens einem von Folgendem sind:

einem Zeitvorstellwert in einer Quellzelle und
der Erkennung einer Kennung, mit einer spezifischen Zelle assoziiert ist.

## Revendications

**1.** Procédé (1200) réalisé par un dispositif sans fil (110), le procédé comprenant :

la détermination (1202) si une ou plusieurs conditions de déclenchement de rapport de mesure sont survenues ; et
le déclenchement (1204) du rapport de mesure sur la base de la survenance des une ou plusieurs conditions, et dans lequel les une ou plusieurs conditions de déclenchement du rapport de mesure sont basées sur au moins l'une parmi :

une valeur d'avance de temporisation dans une cellule source, et
une détection d'un identifiant associé à une cellule spécifique.

**2.** Procédé selon la revendication 1, dans lequel le déclenchement du rapport de mesure est basé au moins en partie sur la détermination qu'une qualité de canal dépasse un seuil.

**3.** Procédé selon l'une quelconque des revendications 1 et 2, dans lequel le déclenchement du rapport de mesure est basé au moins en partie sur la détermination qu'un affaiblissement de propagation estimé est inférieur à un seuil.

**4.** Procédé selon l'une quelconque des revendications 1 à 3, dans lequel le déclenchement du rapport de mesure est basé au moins en partie sur la détermination que le dispositif sans fil est situé à l'intérieur d'une zone délimitée géographiquement.

**5.** Procédé selon l'une quelconque des revendications 1 à 4, dans lequel le déclenchement du rapport de mesure est basé au moins en partie sur la détection de la survenance des une ou plusieurs conditions en ce qui concerne au moins un nombre minimal de cellules.

**6.** Procédé selon l'une quelconque des revendications 1 à 5, comprenant en outre :

la réception, depuis le nœud de réseau, d'informations indiquant une configuration de mesure et au moins une condition associée pour quand le dispositif sans fil doit activer la configuration de mesure ; et
l'activation de la configuration de mesure sur la base de la détermination que l'au moins une condition associée est remplie.

**7.** Procédé selon l'une quelconque des revendications 1 à 6, comprenant en outre :

la réception, depuis le nœud de réseau, d'informations indiquant une configuration de mesure inactive ; et
l'abstention de déclenchement de la configuration de mesure inactive jusqu'à ce qu'elle soit activée par un réseau.

**8.** Procédé selon la revendication 7, comprenant en outre :

la réception, depuis le nœud de réseau, d'une indication d'activer la configuration de mesure inactive, et en réponse à la réception de l'indication, l'activation de la configuration de mesure inactive.

9. Procédé selon l'une quelconque des revendications 1 à 8, comprenant en outre l'envoi, au nœud de réseau, d'une indication que le rapport de mesure a été déclenché.

10. Procédé selon l'une quelconque des revendications 1 à 9, comprenant en outre

la réception d'une configuration de rapport d'emplacement depuis le nœud de réseau ; et
le rapport d'un emplacement du dispositif sans fil au nœud de réseau en fonction de la configuration de rapport d'emplacement.

11. Procédé (1400) réalisé par un nœud de réseau (160), le procédé comprenant :
l'indication (1402), à un dispositif sans fil (110), d'une configuration de mesure et d'une ou plusieurs conditions associées à la configuration de mesure, et dans lequel les une ou plusieurs conditions sont pour le déclenchement du rapport de mesure sur la base d'au moins l'une parmi :

une valeur d'avance de temporisation dans une cellule source, et
une détection d'un identifiant associé à une cellule spécifique.

12. Procédé selon la revendication 11, dans lequel les une ou plusieurs conditions indiquent de déclencher le rapport de mesure sur la base au moins en partie du fait que le dispositif sans fil détermine qu'une qualité de canal dépasse un seuil.

13. Procédé selon l'une quelconque des revendications 11 et 12, dans lequel les une ou plusieurs conditions indiquent de déclencher le rapport de mesure sur la base au moins en partie du fait que le dispositif sans fil détermine qu'un affaiblissement de propagation estimé est inférieur à un seuil.

14. Procédé selon l'une quelconque des revendications 11 à 13, dans lequel les une ou plusieurs conditions indiquent de déclencher le rapport de mesure sur la base au moins en partie du fait que le dispositif sans fil détermine que le dispositif sans fil est situé à l'intérieur d'une zone délimitée géographiquement.

15. Procédé selon l'une quelconque des revendications 11 à 14, dans lequel les une ou plusieurs conditions indiquent de déclencher le rapport de mesure sur la base au moins en partie de la détection d'une survenance des une ou plusieurs conditions en ce qui concerne au moins un nombre minimal de cellules.

16. Procédé selon l'une quelconque des revendications 11 à 15, dans lequel les une ou plusieurs conditions indiquent de déclencher le rapport de mesure sur la base au moins en partie du fait que le dispositif sans fil détecte un identifiant associé à une cellule spécifique.

17. Procédé selon l'une quelconque des revendications 11 à 16, comprenant en outre :

la réception, depuis le dispositif sans fil, d'une ou plusieurs mesures sur la base de la configuration de mesure ; et
la réalisation d'une opération du nœud de réseau sur la base des une ou plusieurs mesures.

18. Procédé selon l'une quelconque des revendications 11 à 17, comprenant en outre :

la réception d'une indication que le rapport de mesure a été déclenché par le dispositif sans fil, et
en réponse à la réception de l'indication que le rapport de mesure a été déclenché, l'activation d'intervalles de mesure.

19. Procédé selon l'une quelconque des revendications 11 à 18, comprenant en outre :

la détermination d'une configuration de rapport d'emplacement à appliquer par le dispositif sans fil ;
l'envoi de la configuration de rapport d'emplacement au dispositif sans fil ;
la réception d'informations de rapport d'emplacement depuis le dispositif sans fil sur la base de la configuration de rapport d'emplacement.

**20.** Dispositif sans fil (110) adapté pour :

déterminer si une ou plusieurs conditions de déclenchement de rapport de mesure sont survenues ; et
déclencher le rapport de mesure sur la base de la survenance des une ou plusieurs conditions, et
dans lequel le déclenchement du rapport de mesure est basé sur au moins l'une parmi :

une valeur d'avance de temporisation dans une cellule source, et
une détection d'un identifiant associé à une cellule spécifique.

**21.** Nœud de réseau (160) adapté pour :

indiquer, à un dispositif sans fil (110), une configuration de mesure et une ou plusieurs conditions associées à la configuration de mesure, et
dans lequel les une ou plusieurs conditions sont pour le déclenchement du rapport de mesure sur la base d'au moins l'une parmi :

une valeur d'avance de temporisation dans une cellule source, et
une détection d'un identifiant associé à une cellule spécifique.

FIGURE 1

EP 4 233 355 B1

FIGURE 2

FIGURE 3

FIGURE 4

EP 4 233 355 B1

FIGURE 5

FIGURE 6

FIGURE 7

243b
Network

243a
Network

200

| 201 Processor | 205 Input/Output Interface | 209 RF Interface | 211 Network Connection Interface | 213 Power Source |

202 Bus

215 Memory

217 RAM

219 ROM

221 Storage Medium
223 Operating System
225 Application Program
227 Data

231 Communication Subsystem

| 233 Transmitter | 235 Receiver |

FIGURE 8

FIGURE 9

EP 4 233 355 B1

FIGURE 10

FIGURE 11

FIGURE 12

FIGURE 13

FIGURE 14

FIGURE 15

1000

Start

1002

Determining whether one or more conditions for triggering measurement reporting have occurred

1004

Triggering the measurement reporting based on the occurrence of the one or more conditions

End

FIGURE 16

1100
Virtual Apparatus

1102
Configuration Unit

1104
Measurement Reporting Unit

FIGURE 17

1200

Start

1202

Determining whether one or more conditions for triggering measurement reporting have occurred

1204

Triggering the measurement reporting based on the occurrence of the one or more conditions, wherein the one or more conditions for triggering the measurement reporting is based on at least one of:
- a timing advance value in a source cell,
- the wireless device being within a pre-determined distance of a satellite node serving the source cell and/or a candidate target cell of the wireless device,
- an expected time for the wireless device to be served in the source cell and/or in the candidate target cell,
- an elevation angle of the satellite node serving the source cell and/or the candidate target cell,
- a point in time configured by the network is reached, and
- an identifier associated with a specific cell is detected

End

FIGURE 18

```
1300
Virtual Apparatus

1302
Determining Unit

1304
Triggering Unit
```

# FIGURE 19

```
1500
Virtual Apparatus

1502
Indicating Unit
```

# FIGURE 20

1400

Start

1404

Indicating, to a wireless device, a measurement configuration and one or more conditions associated with the measurement configuration, and wherein the one or more conditions is for triggering measurement reporting based on at least one of:

- a timing advance value in a source cell,
- the wireless device being within a pre-determined distance of a satellite node serving the source cell and/or a candidate target cell of the wireless device,
- an expected time for the wireless device to be served in the source cell and/or in the candidate target cell,
- an elevation angle of the satellite node serving the source cell and/or the candidate target cell,
- a point in time configured by the network is reached, and
- an identifier associated with a specific cell is detected

End

FIGURE 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020163610 A1
- EP 3681197 A1

### Non-patent literature cited in the description

- **NEC**. Location based mobility enhancement. *3GPP DRAFT; R2-1912977*
- 3rd Generation Partnership Project; Technical Specification Group Radio Access Network; Solutions for NR to support non-terrestrial networks (NTN) (Release 16). *3GPP DRAFT; RP-192504, 3RD GENERATION PARTNERSHIP PROJECT (3GPP), MOBILE COMPETENCE CENTRE*
- NR to support Non-Terrestrial Networks. *3GPP Technical Report (TR) 38.811. In Release 16*
- *TS 38.300 V16.2.0*, July 2020